# EUROPEAN PATENT APPLICATION

(11) **EP 0 564 026 A2**
(43) Date of publication of application: **06.10.1993**
(21) Application number: 93200833.7
(22) Date of filing: 22.03.1993
(51) Int. Cl.: B65B 25/04, B65B 31/00, B65D 81/20, A23B 7/148, A23L 1/28, A23B 7/06, A23B 7/10, A23B 7/00

(54) **Packed mushrooms, and method for packing mushrooms in an inert atmosphere so that they are ready for use**

(30) Priority: 24.03.1992 NL 9200541
(71) Applicant: Oostvogels, Jacobus Adrianus Maria, NL-4881 AS Zundert (NL); Oostvogels, Johannes Petrus Cornelis, NL-4881 BG Zundert (NL)
(72) Inventor: Oostvogels, Jacobus Adrianus Maria, NL-4881 AS Zundert (NL); Oostvogels, Johannes Petrus Cornelis, NL-4881 BG Zundert (NL)
(74) Representative: Barendregt, Frank, Drs.

(57) **Abstract**

Described is a packed at least blanched mushroom product in which the amount of moisture present is restricted to, preferably, 80-90 wt% of the quantity of moisture present after blanching. The mushrooms and/or the moisture may comprise a preservative like citric acid. The mushrooms in a preferred embodiment are washed and sliced prior to blanching.

A method is described of packing mushrooms ready for use. The mushrooms are inserted into a container (20) after the customary treatments, such as rinsing, cutting if desired, blanching and cooling, and subsequently the gas surrounding the mushrooms (22), such as air, is removed from the container (20), and the container (20) is closed.

The removal of the gas surrounding the mushrooms, such as air, from the container (20) may be effected, on the one hand, by establishing an evacuated environment. On the other hand, it may be effected by removing the gas surrounding the mushrooms, such as air, and replacing with a gas atmosphere which is inert to the mushrooms. An inert gas atmosphere may be chosen from carbon dioxide, nitrogen or mixtures of said gases. The container (20) may comprise a bag-shaped container made of plastic or a container having at least a slightly rigid self-supporting plastic section.

## Description

The invention relates to packed mushrooms which are accommodated in a container, in which the mushrooms are essentially surrounded by a medium which is essentially inert for the mushrooms.

Vegetable-type foods packed in a container, and essentially surrounded in the closed container by either vacuum or a gas atmosphere preventing deterioriation of the foods, such as carbon dioxide, nitrogen or mixtures thereof, are known from European Patent Application EP-A-0,153,215.

It appears that when such a pack is used for accommodating mushrooms, their shelf life is limited, and there is rapid discoloration, which makes the product unattractive in appearance.

Surprisingly, it has now been found that the shelf life can increase considerably and the colour also remains excellent if the mushrooms are present in at least blanched form, and if the quantity of moisture present is limited to at most the quantity which the mushrooms comprise after blanching, after the adhering moisture has been essentially removed from them.

Blanching is a heat treatment in, for mushrooms, for example, an aqueous medium by which, on the one hand, the mushrooms can be cooked to a certain degree and, on the other, it can be ensured that the bacteria present in the mushrooms are destroyed or rendered inactive, with the result that the shelf life and the colour retention are very considerably improved.

It has also been found that the product is further improved in shelf life and colour retention if adhering moisture is essentially removed after blanching.

As regards the moisture content, it is pointed out that the quantity of moisture is limited to the maximum quantity of moisture which the mushrooms comprise after blanching, but good results are obtained in particular if the quantity of moisture is less than the moisture which the mushrooms comprise after blanching. The quantity of moisture is therefore 50 - 100% of the quantity by weight of moisture which the mushrooms comprise after blanching. This quantity by weight of moisture is advantageously 80 - 90%, and it is very advantageous if this quantity by weight of moisture is 85 - 88%.

In an advantageous embodiment of the packed mushrooms according to the invention, they are washed and sliced prior to blanching. Any adhering material such as soil or other extraneous material is removed by washing. Slicing the mushrooms means that the pack acquires an attractive, flat appearance, in particular if the atmosphere surrounding the mushrooms is a vacuum atmosphere.

The mushrooms and/or the moisture present can contain a preservative which is permitted for foodstuffs, such as, for example, citric acid.

Although the atmosphere surrounding the mushrooms in the pack can be either vacuum or a suitable gas, vacuum is preferred from the aesthetic point of view. However, with regard to shelf life, a gas such as carbon dioxide, nitrogen or a mixture of these gases is likewise a very good medium for surrounding the mushrooms in a pack.

The invention also relates to a method for packing mushrooms ready for use, in which the processed mushrooms are placed in predetermined portions in a container, and in which the medium surrounding the mushrooms is essentially replaced by a medium which is essentially inert for the mushrooms, following which the container is closed.

The container used can be in many different forms. If the medium surrounding the mushrooms is a vacuum, the container will preferably be a container made of flexible plastic such as polyethylene, polypropylene or polyester.

If the medium surrounding the mushrooms is a gas atmosphere, the container can comprise at least a slightly rigid self-supporting part made of plastic, which can be closed by a plastic part which is rigid or flexible. The plastic of the container can in general be selected from transparent, uncoloured plastic, transparent, coloured plastic, or coloured or uncoloured plastic which is opaque to light, and combinations of such plastics. At least a part of the plastic of the container is preferably a thermoplastic material, so that the container can be sealed by the known heat-sealing techniques.

In the method according to the invention described above, the mushrooms are at least subjected to a washing and blanching operation prior to packing.

As indicated earlier, washing and blanching are important for favourably influencing the appearance and shelf life of the mushrooms.

Blanching of the mushrooms takes place in particular in an acid aqueous medium; said blanching advantageously takes place at a pH of 2 - 3.5, and at a temperature of 90 - 97°C.

In order to acidify the aqueous medium, an acid which is permitted for foodstuffs is preferably used, advantageously citric acid.

In another attractive embodiment of the method according to the invention, the mushrooms are sliced prior to blanching, and in an even more attractive embodiment, the mushrooms are subjected to a vacuum treatment in an aqueous medium before slicing.

Slicing has the advantage that the optimum effect is obtained from blanching, because good penetration of the blanching medium into the cells of the mushroom is obtained; in addition, by having the mushrooms sliced in the pack, an attractive flat, and easily stackable, product is obtained during the application of vacuum.

If the mushrooms are subjected to a vacuum treatment in an aqueous medium before slicing, good penetration of the treatment medium into the cells of the mushroom is obtained, with the result that the subsequent blanching in particular is more effective, thereby improving the shelf life even further.

Following the blanching, the mushroom product is advantageously cooled to essentially ambient temperature. In an attractive embodiment of the method according to the invention, the mushrooms are subjected to a liquid removal and/or drying operation prior to their placing in the container.

Such liquid removal can be carried out by, for example, conveying on a perforated belt the whole mushrooms or the sliced mushrooms which have been subjected to the various operations, in which case the adhering moisture can disappear through the perforations; a vacuum could also be created below the belt, in order to obtain a driving force for removing adhering moisture. The processed mushroom product can also have adhering moisture removed from it by centrifuging. Many other methods will also be obvious to the person skilled in the art. Instead of mechanical moisture removal, or in addition thereto, drying can also be applied; a suitable method of drying is to blow drying gas, for example dry air which can be at a temperature below the ambient temperature, for example 2 to 5°C, onto the product, using fans.

In the method according to the invention, a conventional preservative may, if desired, also be added to the mushroom product, prior to closure of the container.

The invention will now be explained with reference to the drawing, in which:
Fig. 1 shows a quantity of mushrooms vacuum-packed according to the invention;
Fig. 2 shows a quantity of mushrooms surrounded by inert gas in a pack according to the invention; and
Fig. 3 shows a quantity of sliced mushrooms in a vacuum pack according to Fig. 1.

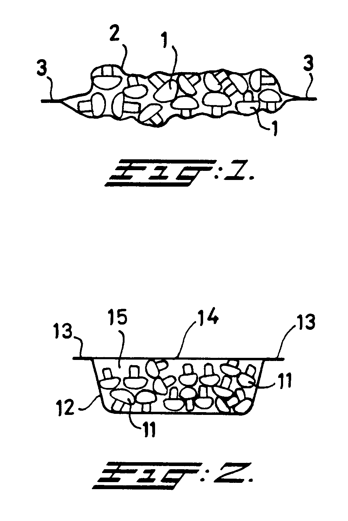

In Fig. 1 the packed mushrooms are indicated by 1, the bag-type container by 2, and the seams formed by heat-sealing by 3. As indicated schematically, the vacuum suction has caused the bag-type container to come into intimate contact with the mushrooms 1, which in turn are in intimate contact with each other. The clear space between the mushrooms is essentially free from gas such as air. The absolute pressure in such a container is approximately 1.3 x 10³ pascal (1 cm mercury pressure). The pressure load on the container caused by the vacuum situation is easily withstood by the mushroom product; no damage to the product is found.

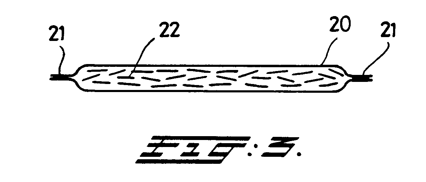

Fig. 2 shows a different embodiment of the pack used, comprising a slightly rigid self-supporting plastic container 12 and a flexible sealing plastic part 14. The mushrooms are in slight contact with each other; the container is closed at the edges by heat-sealing techniques, thus forming a connecting seam 13. The space between the mushrooms 15 is filled with a gas which is inert for the mushrooms, for example carbon dioxide or nitrogen. It has been found that, where carbon dioxide is used, this gas itself can also have a preservative effect, so that the use of a special preservative can be dispensed with in such a case.

Fig. 3 shows a pack of the type shown in Fig. 1, but in which, prior to blanching, the mushrooms 22 are cut into thin slices which, as shown schematically in the figures, lie in flat contact with each other. The container 20 and the heat-sealing seams correspond to the container 2 and the seams 3 from Fig. 1.

It has been found that the packed mushroom product discussed here has a shelf life of at least two weeks, while in particular the natural colour of the product is fully retained. This property is attributed to the combined effects of the blanching operation and the essential removal of moisture adhering after blanching, or a further drying of the product. An unpacked product will have a shelf life of approximately three days in its unpacked state; a product which is blanched and has the adhering moisture removed and/or is dried according to the invention will have a shelf life of at least two weeks.

The removal of adhering moisture after the blanching, or the additional drying of the mushroom product, if carried out, is extremely important for weighing out the product. Through the absence of sticky, adhering moisture, the weighing accuracy is considerably improved, so that the chance of overweight or underweight is greatly reduced. The absence of large quantities of adhering moisture also means that cooking is prevented from occurring during a vacuum process, which is one of the possibilities for carrying out the packing method.

## Claims

1. Packed mushrooms (1; 11) which are accommodated in a container (2; 12), in which the mushrooms are essentially surrounded by a medium which is essentially inert for the mushrooms, **characterised in that** the mushrooms (1; 11) are present in at least blanched form, and the quantity by weight of moisture present is limited to at most the quantity which the mushrooms (1; 11) comprise after blanching and after the adhering moisture has been essentially removed from them.

2. Packed mushrooms (1; 11) according to claim 1, **characterised in that** the quantity of moisture is 50 - 100% of the quantity by weight of moisture which the mushrooms (1; 11) comprise after blanching.

3. Packed mushrooms (1; 11) according to claim 2, **characterised in that** the quantity of moisture is 80 - 90% of the quantity by weight which the mushrooms (1; 11) comprise after blanching.

4. Packed mushrooms (1; 11) according to one or more of the preceding claims, **characterised in that** the mushrooms (1; 11) are washed and sliced prior to blanching.

5. Packed mushrooms (1; 11) according to claims 1 - 4, **characterised in that** the mushrooms (1; 11) and/or the moisture present contain a preservative which is permitted for foodstuffs.

6. Packed mushrooms (1; 11) according to claim 5, **characterised in that** citric acid is present.

7. Method for packing mushrooms (1; 11) so that they are ready for use, in which the processed mushrooms (1; 11) are placed in predetermined portions in a container (2; 12), and in which the medium surrounding the mushrooms (1; 11) is essentially replaced by a medium which is essentially inert for the mushrooms (1; 11), following which the container (2; 12) is closed, **characterised in that** the mushrooms (1; 11) are at least subjected to a washing and blanching operation prior to packing.

8. Method according to claim 7, characterised in that the blanching takes place in an acid aqueous medium.

9. Method according to claim 8, **characterised in that** the blanching takes place at a pH of 2 - 3.5 and at a temperature of 90 - 97°C.

10. Method according to claims 8 - 9, **characterised in that** the aqueous medium comprises citric acid.

11. Method according to one or more of the preceding claims 8 - 10, **characterised in that** the mushrooms (1; 11) are sliced prior to blanching.

12. Method according to claim 11, **characterised in that** the mushrooms are subjected to a vacuum treatment in an aqueous medium before slicing.

13. Method according to one or more of claims 8 - 12, **characterised in that** the mushrooms (1; 11) are cooled to essentially ambient temperature after blanching.

14. Method according to one or more of claims 8 - 13, **characterised in that** the mushrooms (1; 11) are subjected to a liquid removal and/or drying operation prior to placing them in the container (2; 12).

15. Method according to one or more of the preceding claims, **characterised in tha**t a conventional preservative is added prior to closing of the container (2; 12).
